# EUROPÄISCHE PATENTSCHRIFT

(11) **EP 0 801 235 B1**
(45) Veröffentlichungstag und Bekanntmachung des Hinweises auf die Patenterteilung: **25.09.2002**
(21) Anmeldenummer: 97105766.6
(22) Anmeldetag: 08.04.1997
(51) Int. Cl.: F16B 23/00, F16B 41/00

(54) **Abdeckring für eine Mutter und Werkzeug zur Handhabung**
Cap for a nut and tool for its manipulation
Capuchon pour écrou et outil pour sa manipulation

(30) Priorität: 11.04.1996 DE 19614181
(43) Veröffentlichungstag der Anmeldung: 15.10.1997
(73) Patentinhaber: e i b e Produktion- + Vertrieb GmbH, 97285 Röttingen (DE)
(72) Erfinder: Eichinger, Hartmut, 97285 Röttingen (DE)
(74) Vertreter: Pöhner, Wilfried Anton, Dr.

(56) Entgegenhaltungen:
- WO-A-96/22471
- GB-A- 2 090 361
- GB-A- 2 159 447
- US-A- 5 071 300

## Beschreibung

Die Erfindung betrifft einen Abdeckring gemäß Oberbegriff des Anspruchs 1.

Vielfach ist es erwünscht, Schraubverbindungen in allgemein zugänglichen Bereichen anzubringen, die sich nicht mit Standardwerkzeugen demontieren lassen, etwa an öffentlich aufgestellten Spielgeräten, bei denen häufig mutwillige Zerstörungen erfolgen, Fahrzeugen oder technischen Anlagen. Um derartige unlösbare Verbindungen herzustellen, sind im Stande der Technik zwei unterschiedliche Lösungen bekannt.

Einerseits lassen sich anstelle herkömmlicher Muttern Abreißmuttern verwenden. Sie bestehen aus einem gewindelosen Sechskantteil, das über eine Sollbruchstelle mit einer koaxialen Mutter in Verbindung steht, die außenseitig eine glatte, konisch geformte Oberfläche aufweist und auf eine Gewindestange aufgeschraubt wird. Wird beim Anziehen ein vorgegebenes Drehmoment überschritten, so wird die Sollbruchstelle zerstört und es bleibt eine konische Mutter zurück, die mit gebräuchlichen Werkzeugen nicht zu demontieren ist. Als nachteilig erweist sich jedoch, daß die Mutter lediglich einmalig verwendbar ist, eine Demontage auch mit geeignetem Werkzeug schwierig ist und sich das Anzugmoment nicht variieren läßt. Insbesondere kann die Mutter nicht nachgezogen werden, etwa beim Schwinden miteinander verbundener Holzteile. Eine Sicherung herkömmlicher Sechskantmuttern ist auf diese Weise nicht möglich.

Aus der GB 2 195 447 A sind Abdeckringe gattungsgemäßer Art bekannt, mit deren Hilfe eine kraftschlüssige Verbindung zwischen Schraubenkopf und Werkzeug herstellbar wird und nach dem Lösen des Werkzeuges der Schraubenkopf oder die Mutter teilweise verdeckt und damit nicht ohne weiteres von außen zugängig verbleibt. Diese Verbindung ist prinzipiell lösbar, läßt sich jedoch mit einfachen Mitteln abbrechen, so dass Schraubenkopf und Mutter zugänglich werden.

Vor diesen Hintergrund hat sich die Erfindung zur Aufgabe gestellt, einen verbesserten mehrfach verwendbaren Abdeckring für Muttern sowie ein geeignetes Werkzeug zu seiner Handhabung zu entwicklen, mit dem er sich auf einfache Weise lösen läßt, während eine Lösung mit handelsüblichen Werkzeugen nicht möglich ist.

Diese Aufgabe wird erfindungsgemäß durch die Merkmale der kennzeichnugsteils der Anspruchs 1 gelöst.

Der vorgeschlagene Abdeckring entspricht sowohl in bezug auf seine äußere Gestalt als auch die den Schraubenkopf bzw. die Mutter aufnehmende Aussparung den gebräuchlichen Ausführungen. Entsprechend läßt er sich auf die Mutter bzw. den Schraubenkopf aufschlagen und ist infolge der vorzugsweise konischen oder kegelstumpfförmigen Gestalt mit einem gewöhnlichen Werkzeug nicht lösbar. Im Gegensatz zu üblichen Abdeckringen ist jedoch diejenige Öffnung, welche die Aussparung mit der gegenüberliegenden Stirnseite verbindet, ein Hohlzylinder. Seine Innenfläche ist mit einem Gewinde versehen. Somit läßt sich der Abdeckring durch Eindrehen eines Werkzeuges mit einer komplementär geformten Gewindestange, die sich gegebenenfalls auf der Mutter abstützt, abziehen.

Damit das Abziehen nicht bereits mit Hilfe einer gewöhnlichen Schraube ermöglicht wird, ist es entscheidend, daß die Gewindestange in den Hohlzylinder hinein ragt und ihn vorzugsweise auf seiner gesamten Länge durchgreift. Auf diese Weise läßt sich eine gewöhnliche Schraube nicht in den Hohlyzlinder eindrehen, während das Abziehen des Abdeckrings mit einem Spezialwerkzeug, das in den Bereich zwischen Gewindestange und der Wandung des Hohlzylinders eingreift, leicht möglich ist. Zudem verhindert die in den Hohlzylinder hineinstehende Gewindestange das Einführen anderer Werkzeuge, etwa eines Schraubendrehers, um den Abdeckring von der Mutter abzudrücken bzw. abzuhebeln. Auch ohne Gewindestange, etwa im Fall eines Sechskant-Schraubenkopfes, besteht jedoch eine Schutzwirkung, wenn eine dem Gewinde des Hohlzylinders entsprechende Schraube nur schwer beschaffbar ist oder der Schraubenkopf eine Verlängerung aufweist, die in den Hohlzylinder hervor steht..

Der erfindungsgemäße Abdeckring bildet somit einen sicheren Schutz vor dem unbefugten Lösen einer Mutter. Durchgreift eine durch die Mutter fixierte Gewindestange ein Bauteil vollständig und ist somit von beiden Seiten her zugänglich, läßt sich die entgegenwirkende Fixierung auf gleiche Weise sichern oder mit einem flachen Kopf ohne Angriffsflächen für Werkzeuge versehen. Während das unbefugte Lösen des Abdeckrings nahezu unmöglich ist, läßt es sich mit einem geeigneten Werkzeug leicht bewerkstelligen. Dies gilt auch dann, wenn die Mutter, beispielsweise aus optischen Gründen oder zum Schutz vor Verletzungsgefahren, in einer Vertiefung eines Bauteils versenkt angeordnet ist. Im Gegensatz zu einer Abreißmutter läßt sich der Abdeckring daher auch mehrfach verwenden. Als Material bietet sich Stahl an, wobei im Fall der Benutzung im Außenbereich eine Verzinkung zweckmäßig ist. Vorteilhafte Alternativen sind Kunststoffe oder Leichtmetalle, speziell Aluminium.

Bei zu großem Durchmesser des Hohlzylinders besteht die Gefahr, daß sich insbesondere eine unzureichend angezogene Mutter durch Einschieben eines flachen Gegenstandes in den Spalt zwischen Hohlzylinder und ihren Außenflächen lösen läßt. Auch ein Abhebeln des Abdeckrings erleichtert sich bei einem breiten Spalt. Daher wird in einer vorteilhaften Weiterbildung der Erfindung vorgeschlagen, daß der Durchmesser des Hohlzylinders kleiner als der Abstand derjenigen einander gegenüberliegenden, achsparallelen, ebenen Außenflächen der Mutter ist, die als Angriffsflächen für Werkzeuge dienen. Ein derart ausgestalteter Abdeckring ist ohne ein geeignetes Werkzeug nahezu unlösbar.

Stützt sich ein zum Abziehen des Abdeckrings verwendetes Werkzeug auf der Stirnfläche der Mutter ab, so besteht die Gefahr, daß sich ihr Anziehmoment ungewollt ändert. Entsprechend wird vorgeschlagen, daß sich der Drehsinn des Innengewindes des Abdeckrings von dem der Gewindestange unterscheidet. Da für Gewindestangen im allgemeinen Rechtsgewinde üblich sind, handelt es sich bei dem Innengewinde somit zweckmäßig um ein Linksgewinde. In erster Linie verhindert die Verwendung ungebräuchlicher Gewinde, insbesondere von Linksgewinden oder nicht genormten Rechtsgewinden, etwa mit unüblichen Steigungen, jedoch, daß sich eine leicht beschaffbare Schraube in einen Hohlzylinder ohne Gewindestange eindrehen und der Abdeckring sich damit abziehen läßt. Das Lösen der Schraubverbindung durch Unbefugte erfordert in diesem Fall einen erheblichen Aufwand und wird damit i. a. unterbleiben.

Mit dem Ziel, eine möglichst glatte Außenfläche ohne Angriffspunkte für Werkzeuge zu bieten, sind Kanten auf der Außenfläche des Abdeckrings nach Möglichkeit zu vermeiden. Daher ist bevorzugt auch die Kante zwischen der äußeren Umfangsfläche und der Stirnseite des Abdeckrings gerundet. Auch Verletzungsgefahren lassen sich auf diese Weise minimieren.

Ein sicherer Halt des Abdeckrings, der auch bei Temperaturschwankungen erhalten bleibt, setzt eine Materialdeformation beim Aufschieben auf die Mutter voraus. Dabei besteht stets die Gefahr, daß Ring oder Mutter beschädigt werden. Damit eine definierte Verformung entsteht, sind Werkstoffe unterschiedlicher Härten für Mutter und Abdeckring von Vorteil. Bevorzugt ist das Material des Abdeckrings härter, um seine Widerstandsfähigkeit gegenüber einem unbefugten Lösen zu verbessern. Grundsätzlich kann jedoch auch das Material des Abdeckringes weicher als das der Mutter sein. Zu diesen Zwecken reichen in der Regel bereits geringe Unterschiede in der Härte aus, wie sie sich z. B. durch unterschiedliche Legierungszusätze erreichen lassen.

Ein geeignetes Werkzeug zum Lösen des Abdeckrings besitzt einen zylindrischen Schaft mit endseitigem Außengewinde, welches zum Innengewinde des Hohlzylinders komplementär geformt ist. Ein Handhabungsteil, beispielsweise ein Handgriff oder ebene Angriffsflächen parallel der Schaftachse für Werkzeuge, z. B. ein Mehrkant für einen Schrauben- oder Innensechskantschlüssel, ermöglichen die Drehung des Schaftes. Weiterhin ist es erforderlich, daß das mit dem Gewinde versehene Schaftende innenseitig eine axiale zylindrische Aussparung aufweist, deren Durchmesser den der Gewindestange übersteigt, die in den Hohlzylinder hineinsteht. In der Folge läßt sich der Schaft in den Abdeckring bzw. in den Zwischenraum von Gewindestange und Abdeckring einschrauben und ermöglicht sein leichtes Abziehen. Speziell bei festem Sitz auf der Mutter ist es auch denkbar, den Schaft bis auf die Oberseite der Mutter einzudrehen und damit auf ihr abzustützen, so daß der Abdeckring bei weiterem Anziehen angehoben wird.

Ein besonders zweckmäßiges und einfaches Werkzeug zum Lösen entsteht, wenn das Handhabungsteil eine Stange ist, die eine radiale Öffnung des Schaftes durchgreift. Durch eine hinreichende Länge der Griffstange läßt sich nicht nur ein hohes Drehmoment zum Anheben des Abdeckrings erzeugen, sondern sie läßt sich auch gut zum Abziehen des Ringes ergreifen.

Daneben läßt sich das Werkzeug auch zum Halten und Zentrieren des Abdeckrings während der Montage verwenden, wenn der Schaft an der Stirnseite gegenüber dem Gewinde mit einer Aussparung versehen ist, in die sich der Abdeckring einsetzen läßt. Insbesondere entsprechen sich Innendurchmesser der Aussparung und Außendurchmesser des Abdeckrings. Beschädigungen des Rings bei der Montage, etwa durch Hammerschläge, werden vermieden, da die Kraftübertragung durch den Schaft erfolgt. Zweckmäßig besteht der Schaft in diesem Fall ganz oder teilweise aus einem schlagzähen Kunststoff oder Stahl, der bevorzugt gehärtet ist.

Weitere Einzelheiten, Merkmale und Vorteile der Erfindung lassen sich dem nachfolgenden Beschreibungsteil entnehmen, in dem anhand der Zeichnung ein Ausführungsbeispiel näher erläutert ist. Die Zeichnung zeigt in prinzipienhafter Darstellung
- Figur 1:: Mutter mit Abdeckring
- Figur 2:: Draufsicht auf die Basisfläche eines Abdeckrings,
- Figur 3:: Werkzeug zum Lösen.

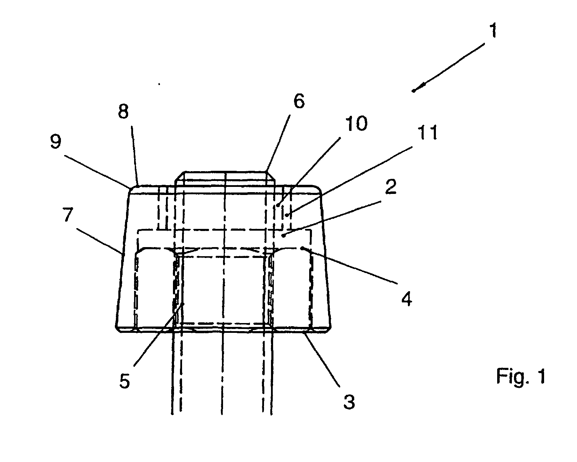

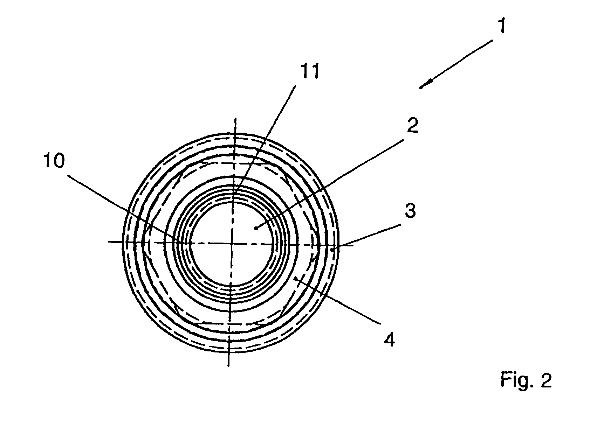

Die Figuren 1 und 2 zeigen einen erfindungsgemäßen Abdeckring (1), der eine rotationssymmetrische Gestalt mit einer durchgehenden axialen Öffnung (2) aufweist, in einer Ansicht und in Draufsicht auf seine Basisfläche (3), wobei von außen nicht sichtbare Elemente jeweils gestrichelt dargestellt sind. Die Öffnung (2) bildet mit ihrem an die Basisfläche (3) angrenzenden Teil eine zylindrische Aussparung (4), deren Höhe und Durchmesser der aufzunehmenden Mutter (5) entspricht, die auf eine Gewindestange (6), beispielsweise den Schaft einer Schraube, aufgedreht ist. Die Gewindestange (6) ist in Figur 2 zur besseren Übersichtlichkeit weggelassen, während die Lage der Mutter (5) lediglich gestrichelt dargestellt ist.

Durch Aufschlagen mit einem Hammer oder Aufpressen ist ein fester Sitz des Abdeckrings (1) auf der Mutter (5) gewährleistet. Infolge seiner glatten Umfangsfläche (7), die zur der Basisfläche (3) gegenüberliegenden Stirnseite (8) konisch zuläuft, läßt sich der Abdeckring (1) mit einem gebräuchlichen Werkzeug, etwa einer Zange, weder sicher ergreifen noch abziehen. Eine Lösung der Mutter (5) durch Unbefugte ist somit nicht möglich. Auch die Abrundung der Kante (9) zwischen Umfangsfläche (7) und Stirnseite (8) erschwert den Angriff von Werkzeugen.

Der obere, von der Basis (3) abgewandte Teil der Öffnung (2) wird durch einen Hohlzylinder (10) gebildet, der mit einem Innengewinde (11) versehen ist. Durch Einschrauben eines Abziehwerkzeuges in das Innengewinde (11) ist somit ein einfaches Entfernen des Abdeckrings (1) von der Mutter (5) möglich. Mit einer gewöhnlichen Schraube oder Gewindestange ist eine Lösung dagegen nicht erreichbar, da ihr Einschrauben durch die in den Hohlzylinder (10) hineinstehende Gewindestange (6) verhindert wird.

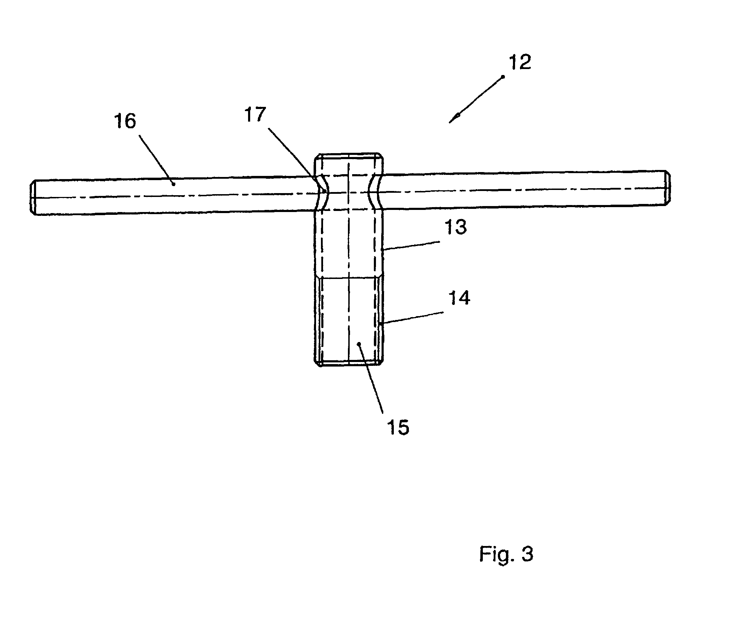

Figur 3 stellt ein vorteilhaftes Werkzeug (12) dar, mit dem sich der Abdeckring (1) von der Mutter (5) abziehen läßt. Das Werkzeug (12) besteht aus einem zylindrischen Schaft (13), der endseitig mit einem Außengewinde (14) versehen ist, welches zum Innengewinde (11) des Abdeckrings (1) komplementär geformt ist und sich daher in ihn einschrauben läßt. Innenseitig ist der Schaft (13) mit einer zylindrischen Aussparung (15) versehen, deren Durchmesser den der Gewindestange (6) übersteigt. Somit läßt sich die Wandung des Schaftes (13) in den Zwischenraum von Gewindestange (6) und Innenfläche des Hohlzylinders (10) eindrehen. Zur Handhabung weist das Werkzeug (12) eine Stange (16) auf, die eine radiale Bohrung (17) des Schaftes (13) durchgreift und sowohl das Einschrauben in den Abdeckring (8) als auch sein Abziehen von der Mutter (5) erleichtert.

Im Ergebnis entsteht somit ein Abdeckring, der das Lösen einer Mutter durch Unbefugte sicher ausschließt, sich jedoch mit geeignetem Werkzeug leicht entfernen und wiederholt verwenden läßt.

## Patentansprüche

1. Abdeckring (1) mit einer Schraube mit Mehrkantkopf (5) und einen als Gewindestange (6) ausgebildeten Abschnitt oder mit einer Mutter (5), die auf einer Gewindestange (6) befestigt ist, wobei der Abdeckring eine rotationssymmetrische Gestalt mit glatten Außenflächen sowie eine durchgehende axiale Öffnung (2) aufweist, und die an einer Stirnseite (3) eine zylindrische Aussparung (4) bildet, deren Tiefe größer oder gleich der Höhe der Mutter ist und die Öffnung (2) an der anderen Stirnseite (8), die der Aussparung (4) gegenüber liegt, die Gestalt eines Hohlzylinders (10) aufweist, der mit einem Innengewinde (11) versehen ist **dadurch gekennzeichnet, daß** der Innendurchmesser der Aussparung (4) geringfügig kleiner oder gleich dem Außendurchmesser der Mutter (5) ist und der Durchmesser des der Aussparung (4) gegenüberliegenden Hohlzylinders (10) größer als der Durchmesser der Gewindestange ist.

2. Abdeckring nach Anspruch 1, **dadurch gekennzeichnet, daß** der Durchmesser des Hohlzylinders (10) kleiner als der Abstand einander gegenüberliegender, achsparalleler, ebener Flächen der Mutter (5) ist.

3. Abdeckring nach Anspruch 1 oder 2, **dadurch gekennzeichnet, daß** das Innengewinde (11) ein nicht genormtes Gewinde ist.

4. Abdeckring nach einem der vorhergehenden Ansprüche, **dadurch gekennzeichnet, daß** eine Kante (9) zwischen einer Umfangsfläche (7) und der Stirnseite (8) abgerundet ist.

5. Abdeckring nach einem der vorhergehenden Ansprüche, **dadurch gekennzeichnet, daß** sich die Härten der Werkstoffe des Abdeckrings (1) und der Mutter (5) unterscheiden.

6. Abdeckring mit Werkzeug zu seiner Handhabung nach einem der vorhergehenden Ansprüche, **dadurch gekennzeichnet, daß** das Werkzeug (12) einen zylindrischen Schaft (13) mit einem endseitigen Außengewinde (14) aufweist, das zum Innengewinde (11) des Hohlzylinders (10) komplementär geformt ist, der Schaft (13) innerhalb des Außengewindes (14) mit einer axialen zylindrischen Aussparung (13) versehen ist, deren Durchmesser größer als der der Gewindestange (6) ist, und das Werkzeug (12) ein Handhabungsteil hat, mit dem der Schaft (13) drehbar ist.

7. Abdeckring mit Werkzeug zu seiner Handhabung nach Anspruch 6, **dadurch gekennzeichnet, daß** das Handhabungsteil eine Stange (16) ist, die eine radiale Bohrung (17) des Schaftes (13) durchgreift, oder von ebenen Flächen parallel der Schaftachse gebildet wird.

8. Abdeckring mit Werkzeug zu seiner Handhabung nach Anspruch 6 oder 7, **dadurch gekennzeichnet, daß** der Schaft (13) in der dem Außengewinde (14) gegenüberliegenden Stirnseite eine Aussparung aufweist, in die der Abdeckring (1) einsetzbar ist.

9. Abdeckring mit Werkzeug zu seiner Handhabung nach Anspruch 8, **dadurch gekennzeichnet, daß** der Schaft (13) aus einem schlagzähen Kunststoff oder Stahl besteht.

## Claims

1. Cover ring (1) having a screw with polygonal head (5) and a section designed as a screw-threaded rod (6) or with a nut (5), which is fastened on a screw-threaded rod (6), the cover ring having a rotationally symmetrical form with smooth outer surfaces and a continuous axial opening (2) and, at one end face (3), forming a cylindrical recess (4), whose depth is greater than or equal to the height of the nut and the opening (2) at the other end face (8), which is opposite the recess (4), having the form of a hollow cylinder (10), which is provided with an internal screw thread (11), **characterised in that** the internal diameter of the recess (4) is slightly smaller or equal to the outer diameter of the nut (5) and the diameter of the hollow cylinder (10), which lies opposite the recess (4), is greater than the diameter of the screw-threaded rod.

2. Cover ring according to claim 1, **characterised in that** the diameter of the hollow cylinder (10) is smaller than the distance between mutually opposite, axially parallel flat surfaces of the nut (5).

3. Cover ring according to claim 1 or 2, **characterised in that** the internal screw thread (11) is a non-standard screw thread.

4. Cover ring according to one of the preceding claims, **characterised in that** an edge (9) between a circumferential surface (7) and the end face (8) is rounded.

5. Cover ring according to one of the preceding claims, **characterised in that** the hardnesses of the materials of the cover ring (1) and of the nut (5) are different.

6. Cover ring with tool for the handling thereof according to one of the preceding claims, **characterised in that** the tool (12) has a cylindrical shank (13) with an external screw thread (14) at the end, which is shaped so as to be complementary to the internal screw thread (11) of the hollow cylinder (10), the shank (13) being provided, within the external screw thread (14), with an axial cylindrical recess (13 [sic]), whose diameter is greater than that of the threaded rod (6), and the tool (12) has a handling part, with which the shank (13) can be rotated.

7. Cover ring with tool for the handling thereof according to claim 6, **characterised in that** the handling part is a rod (16), which penetrates a radial bore (17) of the shank (13), or is formed by flat surfaces parallel to the shank axis.

8. Cover ring with tool for the handling thereof according to claim 6 or 7, **characterised in that** the shank (13) in the end face opposite the external screw thread (14) has a recess into which the cover ring (1) can be inserted.

9. Cover ring with tool for the handling thereof according to claim 8, **characterised in that** the shank (13) is made of an impact-resistant plastic or steel.

## Revendications

1. Bague de protection (1) avec une vis à tête polygonale (5) et une partie en forme de tige filetée (6), ou un écrou (5) fixé sur une tige filetée (6), cette bague de protection à symétrie de révolution et à parois extérieures lisses présentant un orifice axial traversant (2), formant sur une face (3), un évidemment cylindrique (4) de profondeur supérieure ou égale à l'épaisseur de l'écrou, et ayant sur l'autre face (8) opposée à l'orifice (4), la forme d'un cylindre creux pourvu d'un taraudage (11), **caractérisée en ce que** le diamètre intérieur de l'évidemment (4) est légèrement inférieur ou égal au diamètre extérieur de l'écrou (5), et **en ce que** le diamètre du cylindre creux (10) opposé à l'évidemment (4) est supérieur au diamètre de la tige filetée.

2. Bague de protection selon la revendication 1, **caractérisée en ce que** le diamètre du cylindre creux (10) est inférieur à la distance entre les surfaces planes opposées et parallèles de l'écrou (5).

3. Bague de protection selon la revendication 1 ou 2, **caractérisée en ce que** le taraudage (11) n'a pas un pas standard.

4. Bague de protection selon l'une des revendications précédentes, **caractérisée en ce que** une arête (9) entre une surface périphérique (7) et la face (8) est arrondie.

5. Bague de protection selon l'une des revendications précédentes, **caractérisée en ce que** la bague de protection (1) et l'écrou (5) sont réalisés dans des matériaux de différente dureté.

6. Bague de protection avec outil adapté, selon l'une des revendications précédentes, **caractérisée en ce que** l'outil (12) présente une tige cylindrique (13) dont l'extrémité est pourvue d'un filetage extérieur (14) de forme complémentaire par rapport au taraudage (11) du cylindre creux (10), la tige (13) à l'intérieur du filetage extérieur (14) présentant un évidement axial cylindrique (15) de diamètre supérieur à celui de la tige filetée (6), et l'outil (12) étant doté d'une partie permettant de faire tourner la tige (13).

7. Bague de protection avec outil adapté, selon la revendication 6, **caractérisée en ce que** la partie servant à faire tourner la tige est une barre (16) traversant un alésage radial (17) de la tige (13), ou est formée par des surfaces planes parallèles à l'axe de la tige.

8. Bague de protection avec outil adapté, selon la revendication 6 ou 7, **caractérisée en ce que** la tige (13) est dotée d'un évidemment dans la face opposée au filetage extérieur (14), dans lequel vient se loger la bague de protection (1).

9. Bague de protection avec outil adapté, selon la revendication 8, **caractérisée en ce que** la tige (13) est en plastique résistant aux chocs ou en acier.
